(19) **Europäisches Patentamt**
**European Patent Office**
**Office européen des brevets**

(11) **EP 2 191 302 B1**

(12) **EUROPEAN PATENT SPECIFICATION**

(45) Date of publication and mention
of the grant of the patent:
**12.10.2011 Bulletin 2011/41**

(51) Int Cl.:
*G01V 1/36* *(2006.01)*     *G01V 1/38* *(2006.01)*

(21) Application number: **08780998.4**

(22) Date of filing: **25.06.2008**

(86) International application number:
**PCT/US2008/068226**

(87) International publication number:
**WO 2009/020719 (12.02.2009 Gazette 2009/07)**

(54) **REMOVING VIBRATION NOISE FROM MULTICOMPONENT STREAMER MEASUREMENTS**

ENTFERNUNG VON VIBRATIONSRAUSCHEN AUS MEHRKOMPONENTIGEN STREAMER-MESSUNGEN

ELIMINATION DU BRUIT DE VIBRATION DE MESURES DE FLÛTES MULTICOMPOSANTS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.08.2007 US 836587**

(43) Date of publication of application:
**02.06.2010 Bulletin 2010/22**

(73) Proprietor: **Geco Technology B.V.**
**2586 BJ S Gravenhage (NL)**

(72) Inventors:
• **PABON, Jahir**
**Wellesley, MA 02482 (US)**

• **TEIGEN, Oeyvind**
**N-0253 Oslo (NO)**

(74) Representative: **Suckling, Andrew Michael et al**
**Marks & Clerk LLP**
**Oxford Business Park South**
**Oxford, Oxfordshire, OX4 2RU (GB)**

(56) References cited:
**FR-A- 2 884 930**     **US-A1- 2003 147 306**
**US-A1- 2004 042 341**     **US-B1- 6 775 618**
**US-B2- 7 123 543**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The invention generally relates to removing vibration noise from multicomponent streamer measurements.

Seismic exploration involves surveying subterranean geological formations for hydrocarbon deposits. A survey typically involves deploying seismic source(s) and seismic sensors at predetermined locations. The sources generate seismic waves, which propagate into the geological formations creating pressure changes and vibrations along their way. Changes in elastic properties of the geological formation scatter the seismic waves, changing their direction of propagation and other properties. Part of the energy that is emitted by the sources reaches the seismic sensors. Some seismic sensors are sensitive to pressure changes (hydrophones), others to particle motion (e.g., geophones), and industrial surveys may deploy only one type of sensors or both. In response to the detected seismic events, the sensors generate electrical signals to produce seismic data. Analysis of the seismic data can then indicate the presence or absence of probable locations of hydrocarbon deposits.

Some surveys are known as "marine" surveys because they are conducted in marine environments. However, "marine" surveys may be conducted not only in saltwater environments, but also in fresh and brackish waters. In one type of marine survey, called a "towed-array" survey, an array of seismic sensor-containing streamers and sources is towed behind a survey vessel.

A particular marine survey may involve towing a pressure and particle motion sensors on one or more streamers behind a surface vessel. The particular motion sensors typically are sensitive to vibration noise. In the directions that are transverse to the direction in which the streamer is towed, the vibration propagates at velocities much lower than the acoustic velocity of sound in water; and therefore, the vibration noise typically has been determinative of the sensor spacing along the streamer in order to record seismic data, which does not contain aliased vibration noise.

FR 2884930 discloses a hybrid streamer with different hydrophones spacings that are used to eliminate surface ghost notches from the frequency spectrum for the purposes of deghosting. US 2004/0042341 proposes constructing a particle velocity sensor to have an acoustic impedance substantially similar to the acoustic impedance of water for the purposes of enabling the particle velocity sensor output to be combined with a pressure sensor output to attenuate spectral notches caused by ghost reflections. US patent No. 7 123 543 proposes a deghosting technique which relies on both particle motion and pressure sensor data.

SUMMARY

In an embodiment of the invention, a technique includes obtaining a particle motion measurement and a pressure gradient measurement, which were acquired by seismic sensors while in tow. The technique includes removing noise from one of the measurements, which includes scaling the measurements relative to each other and subtracting one of the measurements from the other measurement.

In another embodiment of the invention, a system includes a particle motion sensor adapted to measure particle motion while in tow, one or more seismic sensors adapted to measure a pressure gradient while in tow, an interface and a processor. The interface is adapted to receive data indicative of a particle motion measurement acquired by the particle motion sensor while in tow and data indicative of a pressure gradient measurement acquired by the seismic sensor(s) while in tow. The processor is adapted to process the data to remove noise from one of the measurements by scaling the measurements relative to each other and subtracting one of the measurements from the other measurement.

[Cancelled],

[Cancelled]

Advantages and other features of the invention will become apparent from the following drawing, description and claims.

BRIEF DESCRIPTION OF THE DRAWING

Fig. 1 is a schematic diagram of a marine seismic data acquisition system according to an embodiment of the invention.

Figs. 2 and 5 are flow diagrams depicting techniques to remove vibration noise according to embodiments of the invention.

Fig. 3 is an illustration of a pressure gradient and a particle acceleration at a point due to a traveling acoustic signal.

Fig. 4 is an illustration of a pressure gradient and a particle acceleration at a point due to vibration noise.

Fig. 6 is a schematic diagram of a seismic data processing system according to an embodiment of the invention.

DETAILED DESCRIPTION

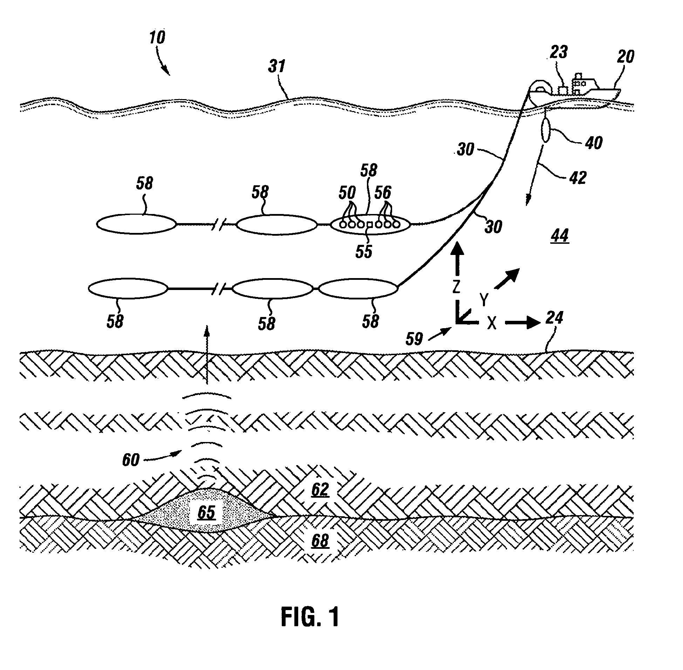

Fig. 1 depicts an embodiment 10 of a marine seismic data acquisition system in accordance with some embodiments of the invention. In the system 10, a survey vessel 20 tows one or more seismic streamers 30 (two exemplary streamers 30 being depicted in Fig. 1) behind the vessel 20. The seismic streamers 30 may be several thousand meters long and may contain various support cables (not shown), as well as wiring and/or circuitry (not shown) that may be used to support communication along the streamers 30.

Each seismic streamer 30 contains seismic sensors, which record seismic signals. In accordance with some embodiments of the invention, the seismic sensors are multi-component seismic sensors 58, each of which is capable of detecting a pressure wavefield and at least one component of a particle motion that is associated with acoustic signals that are proximate to the multi-component seismic sensor 58. Examples of particle motions include one or more components of a particle displacement, one or more components (inline (x), crossline (y) and vertical (z) components (see axes 59, for example)) of a particle velocity and one or more components of a particle acceleration.

Depending on the particular embodiment of the invention, the multi-component seismic sensor 58 may include one or more hydrophones, geophones, particle displacement sensors, particle velocity sensors, accelerometers, pressure gradient sensors, or combinations thereof.

For example, in accordance with some embodiments of the invention, a particular multi-component seismic sensor 58 may include a hydrophone 55 for measuring pressure and three orthogonally-aligned accelerometers 50 to measure three corresponding orthogonal components of particle velocity and/or acceleration near the seismic sensor 58. It is noted that the multi-component seismic sensor 58 may be implemented as a single device (as depicted in Fig. 1) or may be implemented as a plurality of devices, depending on the particular embodiment of the invention. A particular multi-component seismic sensor 58 may also include one or more pressure gradient sensors 56, another type of particle motion sensor. The pressure gradient sensor measures the change in the pressure wavefield at a particular point with respect to a particular direction. For example, one of the pressure gradient sensors 56 may acquire seismic data indicative of, at a particular point, the partial derivative of the pressure wavefield with respect to the crossline direction, and another one of the pressure gradient sensors may acquire, a particular point, seismic data indicative of the pressure data with respect to the inline direction.

In some embodiments of the invention, a particle pressure gradient sensor may be a single sensor, which generates a signal that is indicative of a sensed pressure gradient. In other embodiments of the invention, a pressure gradient sensor may be formed from two acoustic, or pressure, sensors, which are located closely together on the streamer 30. For example, a pressure gradient sensor to detect a pressure gradient in the crossline direction may be formed from two pressure sensors that are part of the same streamer. The two pressure sensor may be located at essentially the same inline position, but the two pressure sensors are slightly offset from each other along the crossline direction. Therefore the two pressure sensors collectively produce a differential signal that is indicative of the pressure gradient in the crossline direction. The spacing between each pair of pressure sensors is significantly less than, for example, the spacing between the pressure sensors of the streamer in the inline direction. Additionally, one or possibly both of the pair may be used to independently provide an indication of a detected pressure and thus, may also serve as a pressure sensor or sensors.

In a similar arrangement, two pressure sensors of the same streamer may likewise be located at the same inline position but may be offset vertically to produce a differential signal that is indicative of the pressure gradient in the vertical direction. Thus, many variations are contemplated and are within the scope of the appended claims.

For purposes of simplifying the discussion herein, the language "pressure gradient sensor" is used, with it being understood that each "pressure gradient sensor" may be formed from one or more sensors, where each of these sensor(s) may be a pressure gradient sensor that directly provides a signal that is indicative of the pressure gradient. or may be a combination of acoustic, or pressure, sensors.

The marine seismic data acquisition system 10 includes one or more seismic sources 40 (one exemplary source 40 being depicted in Fig. 1), such as air guns and the like. In some embodiments of the invention, the seismic sources 40 may be coupled to, or towed by, the survey vessel 20. Alternatively, in other embodiments of the invention, the seismic sources 40 may operate independently of the survey vessel 20, in that the sources 40 may be coupled to other vessels or buoys, as just a few examples.

As the seismic streamers 30 are towed behind the survey vessel 20, acoustic signals 42 (an exemplary acoustic signal 42 being depicted in Fig. 1), often referred to as "shots," are produced by the seismic sources 40 and are directed down through a water column 44 into strata 62 and 68 beneath a water bottom surface 24. The acoustic signals 42 are reflected from the various subterranean geological formations, such as an exemplary formation 65 that is depicted in Fig. 1.

The incident acoustic signals 42 that are acquired by the sources 40 produce corresponding reflected acoustic signals, or pressure waves 60, which are sensed by the multi-component seismic sensors 58. It is noted that the pressure waves that are received and sensed by the multi-component seismic sensors 58 include "up going" pressure waves that propagate to the sensors 58 without reflection, as well as "down going" pressure waves that are produced by reflections of the pressure waves 60 from an air-water boundary 31.

The multi-component seismic sensors 58 generate signals (digital signals, for example), called "traces," which indicate the acquired measurements of the pressure wavefield and particle motion. The traces are recorded and may be at least partially processed by a signal processing unit 23 that is deployed on the survey vessel 20, in accordance with some embodiments of the invention. For example, a particular multi-component seismic sensor 58 may provide a trace, which corresponds to a measure of a pressure wavefield by its hydrophone 55; and the sensor 58 may provide one or more traces that correspond to one or more components of particle motion, which are measured by its accelerometers 50.

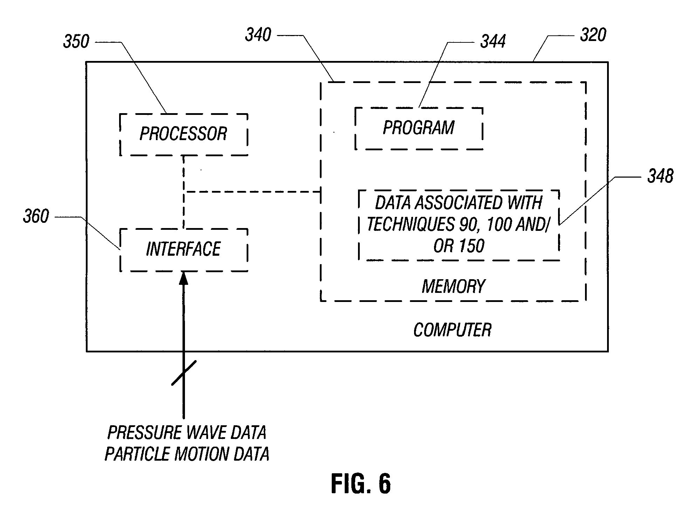

The goal of the seismic acquisition is to build up an image of a survey area for purposes of identifying subterranean geological formations, such as the exemplary geological formation 65. Subsequent analysis of the representation may reveal probable locations of hydrocarbon deposits in subterranean geological formations. Depending on the particular embodiment of the invention, portions of the analysis of the representation may be performed on the seismic survey vessel 20, such as by the signal processing unit 23. In accordance with other embodiments of the invention, the representation may be processed by a seismic data processing system (such as an exemplary seismic data processing system 320 that is depicted in Fig. 6 and is further described below) that may be, for example, located on land or on the vessel 20. Thus, many variations are possible and are within the scope of the appended claims.

The down going pressure waves create an interference known as "ghost" in the art. Depending on the incidence angle of the up going wavefield and the depth of the streamer 30, the interference between the up going and down going wavefields creates nulls, or notches, in the recorded spectrum. These notches may reduce the useful bandwidth of the spectrum and may limit the possibility of towing the streamers 30 in relatively deep water (water greater than 20 meters (m), for example).

The technique of decomposing the recorded wavefield into up and down going components is often referred to as wavefield separation, or "deghosting." The particle motion data that is provided by the multi-component seismic sensors 58 allows the recovery of "ghost" free data, which means data that is indicative of the upgoing wavefield.

In addition to providing the ability to remove surface ghosts, the multi-component data also permits the interpolation of the pressure data in the cross-line direction (i.e., along the y axis) by using the fact that the cross-line component of the particle velocity (called "Vy") is proportional to the cross-line gradient of the pressure (P).

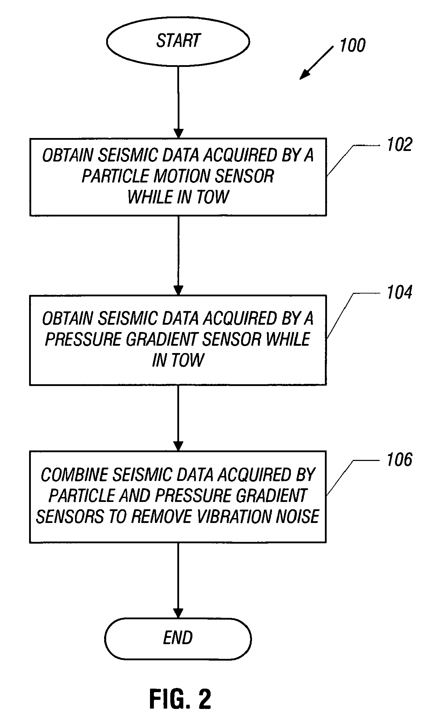

Particle motion sensors such as the above-described accelerometers and pressure gradient sensors may be quite sensitive to vibration noise. The measurements that are acquired by the particle motion sensors may therefore contain vibration noise, which may be difficult to separate from the measured acoustic signal. However, in accordance with embodiments of the invention, which are described herein, measurements from different types of particle motion sensors are combined in a way that filters out the vibration noise. More specifically, referring to Fig. 2, in accordance with embodiments of the invention, a technique 100 includes obtaining (block 102) a first measurement, which was acquired by a particle motion sensor and obtaining (block 104) a second measurement, which was acquired by a pressure gradient sensor. The particle motion and pressure gradient sensors are part of the same streamer and may be positioned in proximity to each other. The first and second measurements are combined, pursuant to block 106, to remove vibration noise.

As a more specific example, vibration noise removed is vibration noise that is transverse to the inline axis of the streamer; and the removal of the vibration noise is based on the following observations: 1.) transverse pressure gradient and accelerometer measurements of an acoustic propagating signal at a particular axial location and time have opposite polarities; and 2.) the transverse pressure gradient and accelerometer measurements of vibration at a particular axial location and time have the same polarity. As described below, by subtracting one of the particle motion and pressure gradient measurements from the other with the appropriate scaling, the transverse vibration noise may be removed, or cancelled.

In general, an accelerometer measurement in the depth (z) direction (see axes 59 in Fig. 1), called "$a_{z\_meas}$," may be described as follows:

$$a_{z\_meas} = a_{z\_aps} + a_{z\_vib},\qquad\text{Eq. 1}$$

where "$a_{z\_aps}$" represents the component of the measurement that is attributable to an acoustic propagating signal; and "$a_{z\_vib}$" represents the component of the measurement, which is attributable to vibration noise.

Similarly, the pressure gradient measurement in the depth (z) direction, called "$\frac{\partial p}{\partial z}meas$," may be described as follows:

$$\frac{\partial p}{\partial z}meas = \frac{\partial p}{\partial z}aps + \frac{\partial p}{\partial z}vib, \qquad\qquad \text{Eq. 2}$$

where "$\frac{\partial p}{\partial z}aps$" represents the component of the measurement, which is attributable to the acoustic propagating signal; and "$\frac{\partial p}{\partial z}vib$" represents the component of the measurement, which is attributable to vibration noise.

The acoustic propagating signal components of Eqs. 1 and 2 are interrelated, as described below:

$$\frac{\partial p}{\partial z}aps = -\rho a_{z\_aps}, \qquad\qquad \text{Eq. 3}$$

where "$\rho$" represents the density of water.

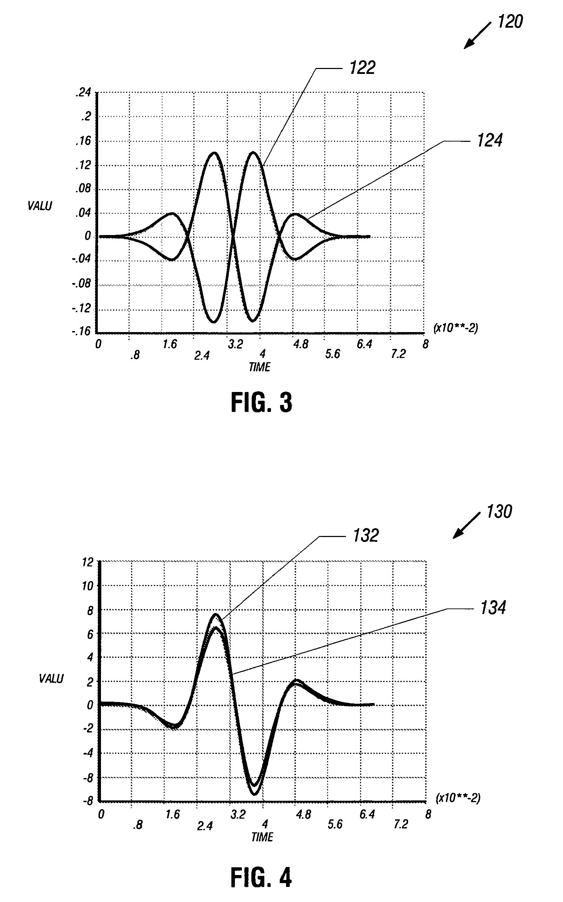

In view of Eq. 3, the acceleration due to the acoustic propagating signal, which is experienced by particles in the fluid (including the streamer) has a sign that is opposite to that of the pressure gradient. Graphically, Fig. 3 depicts this relationship. More specifically, Fig. 3 is an illustration 120 of a waveform 122 depicting the $\frac{\partial p}{\partial z}aps$ component and a waveform 124 of the $a_{z\_aps}$ component scaled by the factor "$\rho$".

When the streamer is vibrating in water, the vibrating motion generates a pressure field around the streamer. The pressure is larger in front of the streamer as the streamer moves (due to particles being pushed) and lower behind the streamer. Therefore, the local pressure gradient is in the same direction and has the same sign as the cable acceleration. Fig. 4 depicts an illustration 130 of a waveform 132 of the $\frac{\partial p}{\partial z}vib$ measurement and a waveform 134 depicting the $a_{z\_vib}$ measurement scaled by the factor "$\rho$". As shown in Fig. 4, the polarities are the same.

Thus, the z, or depth, component of the pressure gradient measurement, which is attributable to vibration noise is related to the z component of the measured acceleration, which is attributable to vibration noise, as set forth below:

$$\frac{\partial p}{\partial z}vib = \frac{\rho a_{z\_vib}}{k_z(\omega)}, \qquad\qquad \text{Eq. 4}$$

where "$k_z$" represents a scaling factor, which may be relatively constant and close to 1.0. However, Eq.4 allows for using a frequency-dependent calibration in order to increase accuracy and allow for design and manufacturing variations.

Because the transverse vibration components of the accelerometer and pressure gradient measurements have the same polarity, and the transverse acoustic propagating signal components of the accelerometer and pressure gradient measurements have opposite polarities, the measurements may be mathematically combined to eliminate the transverse vibration components that are shared in common. More specifically, in accordance with some embodiments of the invention, the pressure gradient measurement may be scaled by the appropriate factor (to effectively convert it into an acceleration measurement) and subtracted from the accelerometer measurement to cancel out the vibration component shared in common and produce a measurement that is indicative of the transverse acoustic propagating signal without the transverse vibration noise. In this manner, the pressure gradient measurement that is described in Eq. 2 may be converted into an acceleration measurement (pursuant to the relationships that are set forth in Eqs. 3 and 4) and subtracted from the actual accelerometer measurement (described by Eq. 1) to derive an acceleration signal in the z, or depth, direction (called "$a_{z,signal}$"), which does not contain the vibration noise component:

$$a_{z,signal} = \frac{1}{1+k_z(\omega)}\left[a_{z\_meas} - \frac{k_z(\omega)}{\rho}\frac{\partial p}{\partial z}meas\right]. \qquad \text{Eq. 5}$$

Similarly, a vibration-free acceleration signal in the y, or crossline, direction (see axes 59 in Fig. 1) may be derived as follows based on the pressure gradient and accelerometer measurements along the crossline direction, as set forth below:

$$a_{y,signal} = \frac{1}{1+k_y(\omega)}\left[a_{y\_meas} - \frac{k_y(\omega)}{\rho}\frac{\partial p}{\partial y}meas\right]. \qquad \text{Eq. 6}$$

Again, the scaling of the pressure gradient measurements by $k_y$ (Eq. 6) and $k_z$ (Eq. 5) may be relatively constant and close to 1.0. However, Eqs. 5 and 6 allow for using a frequency-dependent calibration in order to increase accuracy and allow for design and manufacturing variations.

Among the advantages of the techniques that are set forth herein, the sampling requirement is no longer determined by the acoustic propagating signal. This results in a dramatic decrease in the number of required sensors, as compared to conventional techniques of using accelerometer measurements only. The decrease in the sensor groups may be, as an example, as large as a factor of ten.

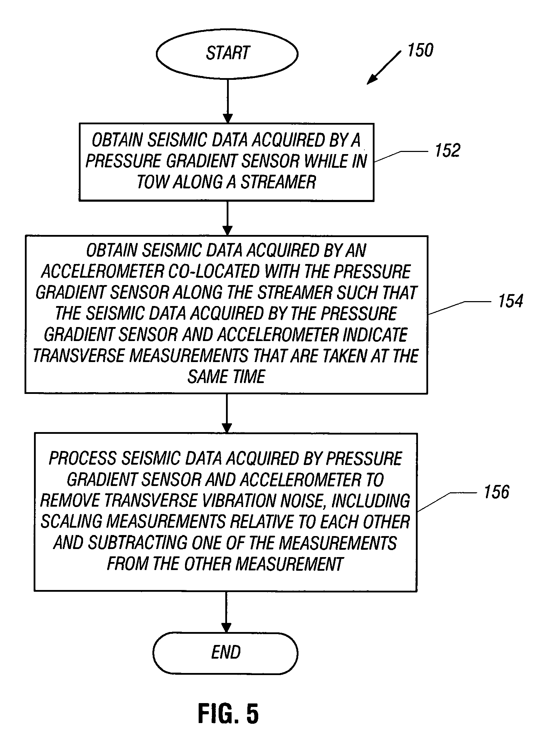

Referring to Fig. 5, to summarize, in accordance with embodiments of the invention described herein, a technique 150 includes obtaining (block 152) a first measurement that was acquired by a pressure gradient sensor while in tow and obtaining (block 154) a second measurement that was acquired by an accelerometer while in tow. The first and second measurements are taken at the same time, and are measurements in a direction that is transverse to the streamer cable. Furthermore, the accelerometer and the pressure gradient sensor are part of the same streamer and may be in proximity to each other (i.e., co-located). The seismic data from the pressure gradient sensor and accelerometer are processed (block 156) to remove transverse vibration noise. This processing includes scaling the pressure gradient and particle motion measurements relative to each other, and subtracting one of the measurements from the other measurement.

Referring to Fig. 6, in accordance with some embodiments of the invention, a seismic data processing system 320 may perform the techniques that are disclosed herein for purposes of removing vibration noise from a particle motion measurement. In accordance with some embodiments of the invention, the system 320 may include a processor 350, such as one or more microprocessors and/or microcontrollers. The processor 350 may be located on a streamer 30 (Fig. 1), located on the vessel 20 or located at a land-based processing facility (as examples), depending on the particular embodiment of the invention.

The processor 350 may be coupled to a communication interface 360 for purposes of receiving seismic data that corresponds to pressure and particle motion measurements. Thus, in accordance with embodiments of the invention described herein, the processor 350, when executing instructions stored in a memory of the seismic data processing system 320, may receive multi-component data that is acquired by multi-component seismic sensors while in tow. It is noted that, depending on the particular embodiment of the invention, the multi-component data may be data that is directly received from the multi-component seismic sensor as the data is being acquired (for the case in which the processor 350 is part of the survey system, such as part of the vessel or streamer) or may be multi-component data that was previously acquired by the seismic sensors while in tow and stored and communicated to the processor 350, which may be in a land-based facility, for example.

As examples, the interface 360 may be a USB serial bus interface, a network interface, a removable media (such as a flash card, CD-ROM, etc.) interface or a magnetic storage interface (IDE or SCSI interfaces, as examples). Thus, the interface 360 may take on numerous forms, depending on the particular embodiment of the invention.

In accordance with some embodiments of the invention, the interface 360 may be coupled to a memory 340 of the seismic data processing system 320 and may store, for example, various data sets involved with the techniques 100 and/or 150, as indicated by reference numeral 348. The memory 340 may store program instructions 344, which when executed by the processor 350, may cause the processor 350 to perform one or more of the techniques that are disclosed herein, such as the techniques 100 and/or 150, as examples.

While the present invention has been described with respect to a limited number of embodiments, those skilled in the art, having the benefit of this disclosure, will appreciate numerous modifications and variations therefrom. It is intended that the appended claims cover all such modifications and variations as fall within the scope of this present invention.

**Claims**

1. A method comprising:

    obtaining (102, 104, 152, 154) a particle motion measurement and a pressure gradient measurement acquired by seismic sensors while in tow;
    the method being **characterised in that** it further comprises removing (106; 156) vibration noise from one of the measurements, including scaling the measurements relative to each other and subtracting one of the measurements from the other measurement.

2. The method of claim 1, further comprising:

    (1) obtaining the pressure gradient measurement from at least two pressure sensors (55) located on a streamer; or
    (2) acquiring the particle motion measurement from a particle motion sensor; and acquiring the pressure gradient measurement from a pressure gradient sensor (56) that is in close proximity to the particle motion sensor.

3. The method of claim 1, wherein the pressure gradient and particle motion measurements are taken along a direction generally traverse to a streamer (30) and the vibration noise comprises vibration noise along a direction generally traverse to the streamer (30).

4. The method of claim 3, wherein the direction along which the first and second measurements are taken comprises a crossline direction or a vertical direction.

5. The method of claim 1, wherein the particle motion and pressure gradient measurements are acquired at approximately the same time, or wherein the act of obtaining the particle motion measurement comprises obtaining seismic data from an accelerometer (50).

6. A system (320) comprising:

    a particle motion sensor (50) adapted to measure particle motion while in tow;
    one or more seismic sensors (55, 56) adapted to measure a pressure gradient while in tow;
    an interface (360) to receive first data indicative of a particle motion measurement acquired by the particle motion sensor (50) while in tow and second data indicative of a pressure gradient measurement acquired by the seismic sensor(s) (55, 56) while in tow;
    the system being **characterised in that** it further comprises a processor (350) to process the data to remove vibration noise from one of the measurements by scaling the measurements relative to each other and subtracting one of the measurements from the other measurement.

7. The system of claim 6, wherein the pressure gradient measurement is formed from signals acquired from at least two pressure sensors (55), or wherein the particle motion and pressure gradient measurements are acquired at approximately the same time, or wherein the processor is located on a streamer (30).

8. The system of claim 6, wherein the particle motion and pressure gradient measurements are taken along a direction generally traverse to a streamer (30) and the vibration noise comprises vibration noise along a direction generally traverse to the streamer (30).

9. The system of claim 8 wherein the direction along which the particle motion and pressure gradient measurements are taken comprises a crossline direction, or wherein the direction along which the particle motion and pressure gradient measurements are taken comprises a vertical direction.

10. The system of claim 8 wherein the particle motion sensor is in close proximity to the one or more seismic sensors (55, 56).

11. The system of claim 6, further comprising:

    a vessel to tow the seismic sensors.

**12.** The system of claim 11 wherein the processor is located on the vessel.

**Patentansprüche**

**1.** Verfahren, das Folgendes umfasst:

das Gewinnen (102, 104; 152, 154) einer Teilchenbewegungsmessung und einer Druckgradientenmessung, erfasst durch seismische Sensoren, während sie sich im Schlepp befinden, wobei das Verfahren **dadurch gekennzeichnet ist, dass** es ferner das Entfernen (106; 156) von Vibrationsrauschen aus einer der Messungen umfasst, einschließlich des Skalierens der Messungen im Verhältnis zueinander und des Abziehens der einen der Messungen von der anderen Messung.

**2.** Verfahren nach Anspruch 1, das ferner Folgendes umfasst:

(1) das Gewinnen der Druckgradientenmessung von wenigstens zwei Drucksensoren (55), die auf einem Streamer angeordnet sind, oder
(2) das Gewinnen der Teilchenbewegungsmessung von einem Teilchenbewegungssensor und das Gewinnen der Druckgradientenmessung von einem Druckgradientensensor (56), der sich in enger Nachbarschaft zu dem Teilchenbewegungssensor befindet.

**3.** Verfahren nach Anspruch 1, wobei die Druckgradienten- und die Teilchenbewegungsmessung längs einer Richtung, im Allgemeinen quer zu einem Streamer (30), vorgenommen werden und das Vibrationsrauschen ein Vibrationsrauschen längs einer Richtung, im Allgemeinen quer zu dem Streamer (30), umfasst.

**4.** Verfahren nach Anspruch 3, wobei die Richtung, längs derer die erste und die zweite Messung vorgenommen werden, eine Querlinienrichtung oder eine vertikale Richtung umfasst.

**5.** Verfahren nach Anspruch 1, wobei die Teilchenbewegungs- und die Druckgradientenmessung zu ungefähr der gleichen Zeit erfasst werden oder wobei der Vorgang des Gewinnens der Teilchenbewegungsmessung das Gewinnen von seismischen Daten von einem Beschleunigungsmesser (50) umfasst.

**6.** System, das Folgendes umfasst:

einen Teilchenbewegungssensor (50), der dafür eingerichtet ist, eine Teilchenbewegung zu messen, während er sich im Schlepp befindet, einen oder mehrere seismische Sensoren (55, 56), der/die dafür eingerichtet ist/sind, einen Druckgradienten zu messen, während er/sie sich im Schlepp befindet/befinden, eine Schnittstelle (360) zum Empfangen von ersten Daten, die repräsentativ sind für eine Teilchenbewegungsmessung, erfasst durch den Teilchenbewegungssensor (50), während er sich im Schlepp befindet, und zweiten Daten, die repräsentativ sind für eine Druckgradientenmessung, erfasst durch den/die seismischen Sensoren (55, 56), während er/sie sich im Schlepp befindet/befinden, wobei das System **dadurch gekennzeichnet ist, dass** es ferner einen Prozessor (350) umfasst, um die Daten zu verarbeiten, um Vibrationsrauschen aus einer der Messungen zu entfernen, durch das Skalieren der Messungen im Verhältnis zueinander und das Abziehen der einen der Messungen von der anderen Messung.

**7.** System nach Anspruch 6, wobei die Druckgradientenmessung gebildet wird aus Signalen, erfasst von wenigstens zwei Drucksensoren (55), oder wobei die Teilchenbewegungs- und die Druckgradientenmessung zu ungefähr der gleichen Zeit erfasst werden oder wobei der Prozessor auf einem Streamer (30) angeordnet ist.

**8.** System nach Anspruch 6, wobei die Druckgradienten- und die Teilchenbewegungsmessung längs einer Richtung, im Allgemeinen quer zu einem Streamer (30), vorgenommen werden und das Vibrationsrauschen ein Vibrationsrauschen längs einer Richtung, im Allgemeinen quer zu dem Streamer (30), umfasst.

**9.** System nach Anspruch 8, wobei die Richtung, längs derer die Teilchenbewegungs- und die Druckgradientenmessung vorgenommen werden, eine Querlinienrichtung umfasst oder wobei die Richtung, längs derer die Teilchenbewegungs- und die Druckgradientenmessung vorgenommen werden, eine vertikale Richtung umfasst.

10. System nach Anspruch 8, wobei sich der Teilchenbewegungssensor in enger Nachbarschaft zu dem einen oder den mehreren seismischen Sensoren (55, 56) befindet.

11. System nach Anspruch 6, das Folgendes umfasst:

   ein Schiff, um die seismischen Sensoren zu schleppen.

12. System nach Anspruch 11, wobei der Prozessor auf dem Schiff angeordnet ist.

**Revendications**

1. Procédé, comprenant les étapes ci-dessous :

   obtention (102, 104 ; 152, 154) d'une mesure du déplacement des particules et d'une mesure d'un gradient de pression acquises par des capteurs sismiques remorqués ;
   le procédé étant **caractérisé en ce qu'**il comprend en outre l'étape d'élimination (106; 156) des bruits de vibrations de l'une des mesures, englobant la mise à l'échelle des mesures l'une par rapport à l'autre et de soustraction de l'une des mesures de l'autre mesure.

2. Procédé selon la revendication 1, comprenant en outre les étapes ci-dessous :

   (1) obtention de la mesure du gradient de pression par au moins deux capteurs de pression (55) agencés sur une flûte sismique ; ou
   (2) acquisition de la mesure du déplacement des particules par un capteur du déplacement des particules ; et acquisition de la mesure du gradient de pression par un capteur du gradient de pression (56) agencé à proximité étroite du capteur du déplacement des particules.

3. Procédé selon la revendication 1, dans lequel les mesures du gradient de pression et du déplacement des particules sont effectuées le long d'une direction généralement transversale à une flûte sismique (30), les bruits de vibrations comprenant les bruits de vibrations le long d'une direction généralement transversale à la flûte sismique (30).

4. Procédé selon la revendication 3, dans lequel la direction le long de laquelle sont effectuées les première et deuxième mesures comprend une direction transversale ou une direction verticale.

5. Procédé selon la revendication 1, dans lequel les mesures du déplacement des particules et du gradient de pression sont acquises pratiquement en même temps, ou dans lequel l'étape d'obtention de la mesure du déplacement des particules comprend l'obtention de données sismiques par un accéléromètre (50).

6. Système (320), comprenant :

   un capteur du déplacement des particules (50) adapté pour mesurer le déplacement des particules au cours du remorquage ;
   un ou plusieurs capteurs sismiques (55, 56), adaptés pour mesurer un gradient de pression au cours du remorquage ;
   une interface (360) pour recevoir des premières données indicatrices d'une mesure du déplacement des particules acquise par le capteur du déplacement des particules (50) au cours du remorquage, et des deuxièmes données indicatrices d'une mesure du gradient de pression acquises par le(s) capteurs(s) sismique(s) au cours du remorquage ;
   le système étant **caractérisé en ce qu'**il comprend en outre un processeur (350) pour traiter les données afin d'éliminer les bruits de vibrations de l'une des mesures par mise à l'échelle des mesures l'une par rapport à l'autre et soustraction de l'une des mesures de l'autre mesure.

7. Système selon la revendication 6, dans lequel la mesure du gradient de pression est formée à partir de signaux acquis par au moins deux capteurs de pression (55), ou dans lequel les mesures du déplacement des particules et du gradient de pression sont acquises pratiquement en même temps, ou dans lequel le processeur est agencé sur une flûte sismique (30).

8. Système selon la revendication 6, dans lequel les mesures du déplacement des particules et du gradient de pression sont effectuées le long d'une direction généralement transversale à une flûte sismique (30), les bruits de vibrations comprenant des bruits de vibrations le long d'une direction généralement transversale à la flûte sismique (30).

9. Système selon la revendication 8, dans lequel la direction le long de laquelle les mesures du déplacement des particules et du gradient de pression sont effectuées comprend une direction transversale, ou dans lequel la direction le long de laquelle les mesures du déplacement des particules et du gradient de pression sont effectuées comprend une direction verticale.

10. Système selon la revendication 8, dans lequel le capteur du déplacement des particules est agencé à proximité étroite d'un ou de plusieurs capteurs sismiques (55, 56).

11. Système selon la revendication 6, comprenant en outre :

un navire pour remorquer les capteurs sismiques.

12. Système selon la revendication 11, dans lequel le processeur est agencé sur le navire.

**FIG. 1**

START

*100*

OBTAIN SEISMIC DATA ACQUIRED BY A
PARTICLE MOTION SENSOR
WHILE IN TOW

*102*

OBTAIN SEISMIC DATA ACQUIRED BY A
PRESSURE GRADIENT SENSOR WHILE
IN TOW

*104*

COMBINE SEISMIC DATA ACQUIRED BY
PARTICLE AND PRESSURE GRADIENT
SENSORS TO REMOVE VIBRATION NOISE

*106*

END

**FIG. 2**

FIG. 3

FIG. 4

START

150

OBTAIN SEISMIC DATA ACQUIRED BY A
PRESSURE GRADIENT SENSOR WHILE IN
TOW ALONG A STREAMER — 152

OBTAIN SEISMIC DATA ACQUIRED BY AN
ACCELEROMETER CO-LOCATED WITH THE PRESSURE
GRADIENT SENSOR ALONG THE STREAMER SUCH THAT
THE SEISMIC DATA ACQUIRED BY THE PRESSURE
GRADIENT SENSOR AND ACCELEROMETER INDICATE
TRANSVERSE MEASUREMENTS THAT ARE TAKEN AT THE
SAME TIME — 154

PROCESS SEISMIC DATA ACQUIRED BY PRESSURE
GRADIENT SENSOR AND ACCELEROMETER TO
REMOVE TRANSVERSE VIBRATION NOISE, INCLUDING
SCALING MEASUREMENTS RELATIVE TO EACH OTHER
AND SUBTRACTING ONE OF THE MEASUREMENTS
FROM THE OTHER MEASUREMENT — 156

END

**FIG. 5**

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2884930
- US 20040042341 A
- US 7123543 B